# EUROPEAN PATENT SPECIFICATION

(11) **EP 1 586 481 B1**
(45) Date of publication and mention of the grant of the patent: **18.07.2007**
(21) Application number: 05016072.0
(22) Date of filing: 14.01.2002
(51) Int. Cl.: B60N 2/015, B60N 2/30, B60J 5/10

(54) **Retractable seat assembly for a motor vehicle**
Klappsitz für Hecktür
Ensemble de siège escamotable pour un véhicule à moteur

(30) Priority: 12.01.2001 US 261398 P; 13.09.2001 US 322128 P
(43) Date of publication of application: 19.10.2005
(62) Divisional of application: 02713409.7
(73) Proprietor: Intier Automotive Inc., Troy, MI 48084 (US)
(72) Inventor: Welch, Christopher, Pontiac, Michigan 48341 (US); Chang, Ben S., Northville, MI 48167 (US); Neale, Colin G., Northville, MI 48167 (US)
(74) Representative: Hössle Kudlek & Partner

(56) References cited:
- DE-C- 4 406 651
- DE-C- 19 943 454
- FR-A- 2 725 669

## Description

### Background of the Invention

### 1. Field of the Invention

The invention relates to vehicle seat assemblies. More particularly, this invention is directed to a rear seat assembly that is movable to a position adjacent to a rear lift gate to provide unobstructed access to a passenger compartment through the rear lift gate.

### 2. Description of the Related Art

Certain motor vehicles, such as minivans and sport utility vehicles, include a second and even a third row of seat assemblies for vehicle passengers. However, there are times when a vehicle operator will alternatively desire additional cargo space within the motor vehicle rather than the additional row or rows of seat assemblies. In these instances, storage or removal of these seat assemblies is required to provide the additional cargo space desired.

Many vehicle seat assembly storage or removal systems are known in the art. For example, a seat assembly may be pivotally mounted to the floor of the vehicle by risers so that the seat assembly moves between an upright seating position and a forwardly folded position where the seat back is pivoted against the seat cushion and then the seat assembly is pivoted about the riser to an upright position adjacent a front row of seats. However, the risers utilized in such systems are often fixedly mounted to the vehicle floor and positioned inboard of the vehicle sidewall such that floor space is compromised and storage space diminished.

DE 44 06 651 C1 (corresponding to the preamble of claim 1) relates to a passenger car having at least two rows of seats and a loading compartment which adjoins the rear row of seats provided with head restraints, and is accessible after a rear door has been pivoted up. To increase the size of the loading compartment, without the backrest being stressed by the loaded goods, said backrest, after its associated seat cushion has been pivoted up around a pivot access on the front side of the seat cushion, is pivoted up together with the rear door around an access assigned to the pivot axis of said door.

It is known to provide risers that may be removably detached from the vehicle floor so that the vehicle seat assemblies can be completely removed from the floor and the cargo area of the vehicle. Such removable seating assemblies provide for a maximum amount of cargo space. However, once the cargo has been removed, the additional seating space provided by the additional row or rows of seating assemblies is recovered only by going back to the place where the vehicle seat assembly was removed and then reinstalling the additional row or rows of vehicle seat assemblies.

In addition, rollers have been used to aid in the removal of seat assemblies. Finally, storage systems providing for storage of the seat assemblies in a space underneath the vehicle floor are also known in the art. However, both rollers and storage systems underneath the vehicle floor require a large amount of user manipulation of heavy seat assemblies.

As a result, there is a need for a rear seat assembly that can be easily moved into a stowed configuration to provide access to a cargo storage area of the vehicle.

### Summary of the Invention

The invention is defined in independent claim 1. Further features thereof are disclosed in the dependent claims.

A rear seat assembly that is movable between a use configuration and a stowed configuration within a passenger compartment of a motor vehicle, which includes a floor, a roof, a pair of sidewalls extending between the floor and the roof, and a rear lift gate, has been provided. The rear seat assembly includes a seat cushion having a front portion and a rear portion. The rear seat assembly also includes a seat back disposed adjacent to the rear portion of the seat cushion, and a translator coupled to the seat back. The translator moves the seat back between the use configuration and the stowed configuration in which the seat back is adjacent to the rear lift gate.

### Brief Description of the Drawings

Advantages of the invention will be readily appreciated as the same becomes better understood by reference to the following detailed description when considered in connection with the accompanying drawings 6 to 8 wherein:
Figure 1 is a perspective view of a rear seat assembly not incorporated by the present invention including a seat cushion and a seat back in a use configuration and a passenger compartment of a motor vehicle, partially cut away;
Figure 2 is a perspective view of the rear seat assembly shown in figure 1 with the seat back adjacent to a rear lift gate;
Figure 3 is a perspective view of the rear seat assembly shown in figure 1 including the seat cushion and the seat back in a stowed configuration adjacent to the rear lift gate;
Figure 4 is a cross-sectional, side view of the rear seat assembly shown in figure 1 in both the use configuration and the stowed configuration;
Figure 5 is a side view of a vehicle showing the rear lift gate of the rear seat assembly shown in figure 1 in an opened position with the seat cushion and the seat back secured to the rear lift gate;
Figure 6 is a side view of one embodiment of the invention incorporated into a rear seat assembly;
Figure 7 is a perspective side view of a seat back according to an embodiment of the invention;
Figure 8 is a perspective view of a motor vehicle showing a rear lift gate in an opened position and the seat back in a stowed configuration according to an embodiment of the invention;
Figure 9 is a perspective view of a rear seat assembly not incorporated by the present invention including a translator having a pivot mechanism and a pair of swing arms; and
Figure 10 is a perspective view of the rear seat assembly shown in Figure 9 with the rear seat assembly in a stowed configuration.

### Detailed Description of the Drawings

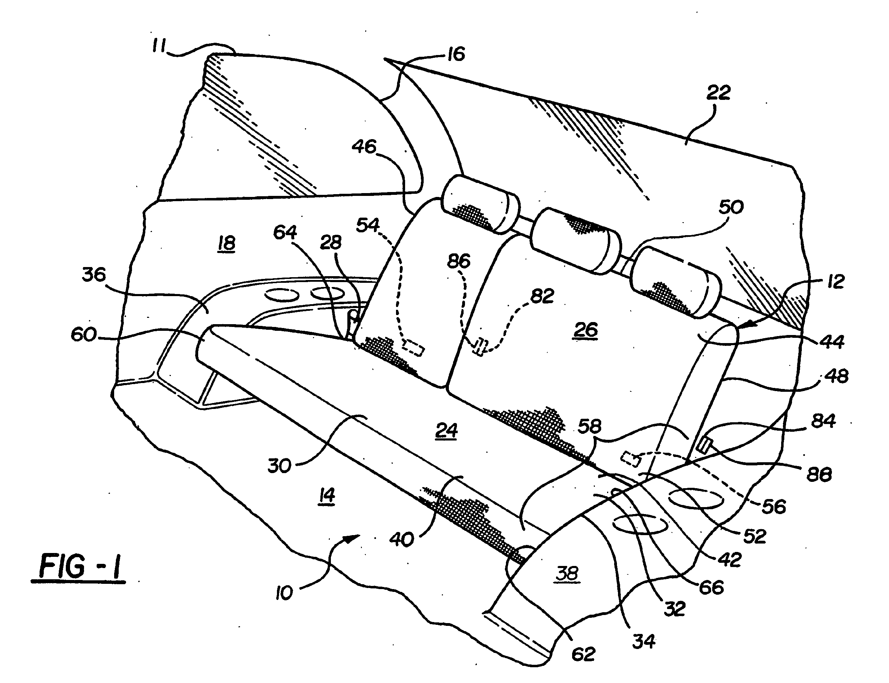

Referring to Figure 1, a passenger compartment of a motor vehicle 11 is generally shown at 10. The passenger compartment 10 includes a rear seat assembly, generally indicated at 12, as well as a floor 14 and a roof 16. A pair of opposing, generally parallel sidewalls 18, 20 interconnect the floor 14 and the roof 16. The floor 14 and the roof 16 are further interconnected by a rear lift gate 22. The rear lift gate 22 moves between a closed position and an open position in which the passenger compartment 10 is accessible for loading and unloading cargo.

The rear seat assembly 12 includes a seat cushion 24 and a seat back 26. The seat cushion 24 and the seat back 26 are pivotally interconnected by a recliner mechanism 28 for movement of the rear seat assembly 12 between a generally upright position and a folded position.

The seat cushion 24 includes a front portion 30 and a rear portion 32. The seat cushion 24 also includes a generally rectangular seat cushion frame 34 having a pair of generally parallel seat cushion side members 36, 38. A front cross member 40 and a rear cross member 42 connect the seat cushion side members 36, 38. The seat cushion frame 34 includes a pair of front roller mechanisms 60, 62 and a pair of rear roller mechanisms 64, 66 for supporting the seat assembly 12. The front roller mechanisms 60, 62 are generally positioned at the intersection of the front cross member 40 and the seat cushion side members 36, 38. The rear roller mechanisms 64, 66 are generally positioned at the intersection of the rear cross member 42 and the seat cushion side members 36, 38.

The seat back 26 includes a generally rectangular seat back frame 44 having a pair of generally parallel seat back side members 46, 48. The seat back side members 46, 48 are interconnected by an upper cross member 50 and a lower cross member 52. The seat back frame 44 includes a pair of seat back latch mechanisms 54, 56, which are fixedly secured to the lower cross member 52.

A translator, generally indicated at 58, is a group of mechanisms that cooperate to move the seat back 26. More specifically, the translator 58 provides a path through which the seat back 26 is retracted to its stowed configuration and moved forward to its use configuration. The translator 58 may engage upper and lower portions of the seat back 26 to effect the translation thereof between the two configurations. The translator 58 will be discussed in greater detail subsequently.

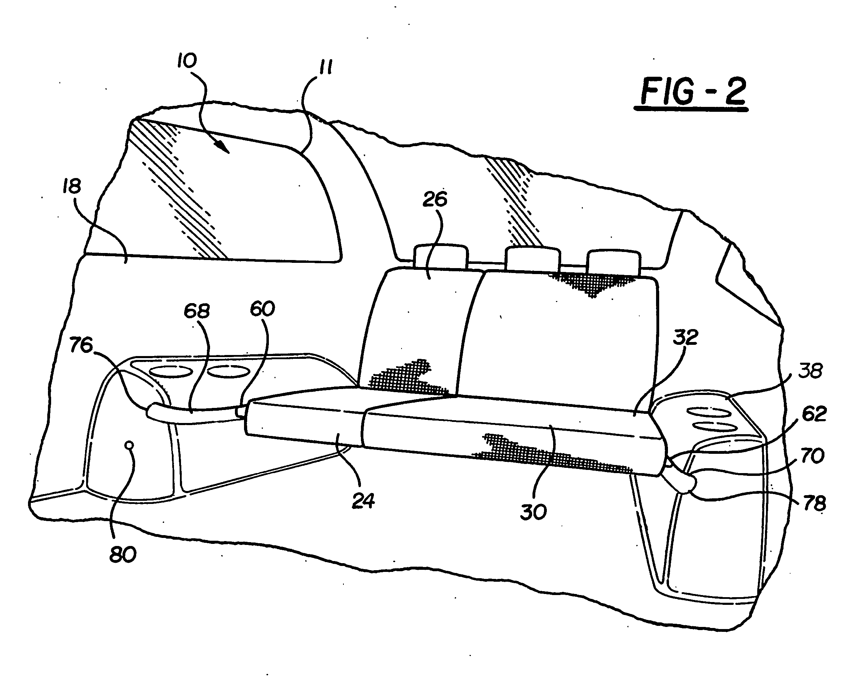

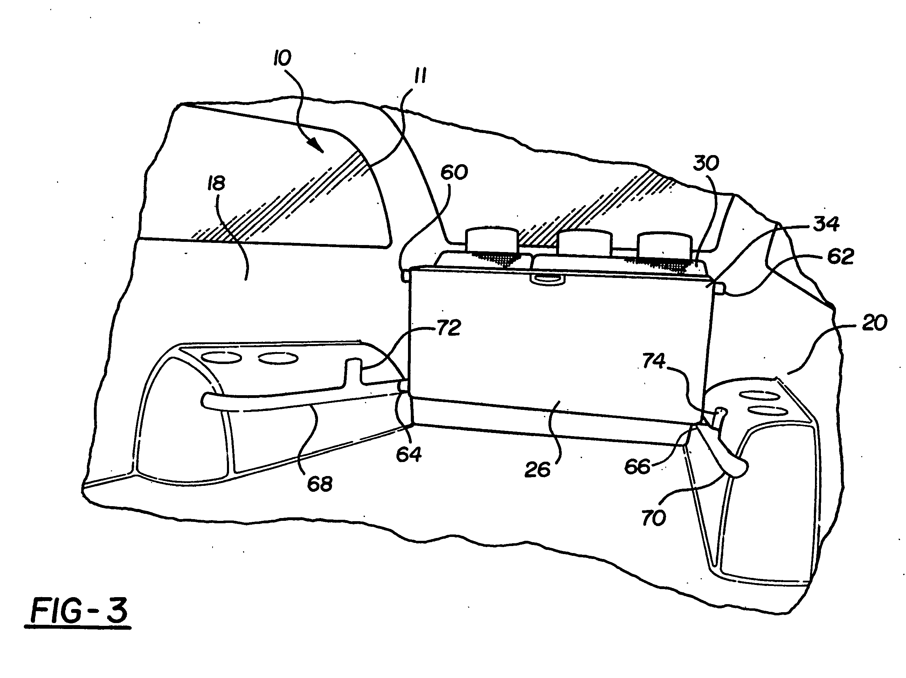

Referring to Figure 3, the translator 58 includes generally parallel recesses 68, 70, which permit the front roller mechanisms 60, 62 and the rear roller mechanisms 64, 66 to engage the sidewalls 18, 20 and provide support for the seat assembly 12. The recesses 68, 70 allow the seat assembly 12 to move between a use configuration, as shown in Figures 1 and 2, and stowed configuration, as shown in Figure 3. The recesses 68, 70 are shown having a C-shape, however, the recesses 68, 70 may be formed in various shapes. Each of the recesses 68, 70 include an upwardly extending relief 72, 74 for allowing the front roller mechanisms 60, 62 to disengage from the recesses 68, 70. Furthermore, when the rear seat assembly 12 is in the stowed configuration, the recesses 68, 70 are open next to the rear lift gate 22 to allow the rear roller mechanisms 64, 66 to disengage.

Referring now to Figure 2, the translator 58 includes latch mechanisms 76, 78, which engage the front roller mechanisms 60, 62 when the rear seat assembly 12 is in the use configuration. The latch mechanisms 76, 78 thus hold the rear seat assembly 12 in the use configuration. A button 80 releases the front roller mechanisms 60, 62 from the latch mechanisms 76, 78, thus disengaging the seat cushion 24 and allowing for movement of the seat assembly 12 from the use configuration to the stowed configuration.

Referring once again to Figure 1, the rear lift gate 22 further includes recess areas 82, 84. Each of the recess areas 82, 84 include a striker 86, 88. The recess areas 82, 84 receive the seat back latch mechanisms 54, 56 and guide the seat back latch mechanisms 54, 56 into engagement with the strikers 86, 88. The seat back latches 54, 56 lock the seat back 26 to the lift gate 22.

In operation, the rear seat assembly 12 is generally found in the use configuration. The recliner mechanism 28 is actuated bringing the seat back 26 to the generally upright position to allow the seat back 26 to mate with the rear lift gate 22. The button 80 is pressed, thereby releasing the front roller mechanisms 60, 62 and allowing the rear seat assembly 12 to pivot to the stowed configuration. As the stowed configuration is obtained, the latch mechanisms 54, 56 enter the recess areas 82, 84 which engage each of the latch mechanisms 54, 56 to the corresponding strikers 86, 88 located therein, thereby securing the rear seat assembly 12 to the rear lift gate 22. Finally, the recliner mechanism 28 is actuated to allow the seat cushion 24 to be lifted to a generally vertical position.

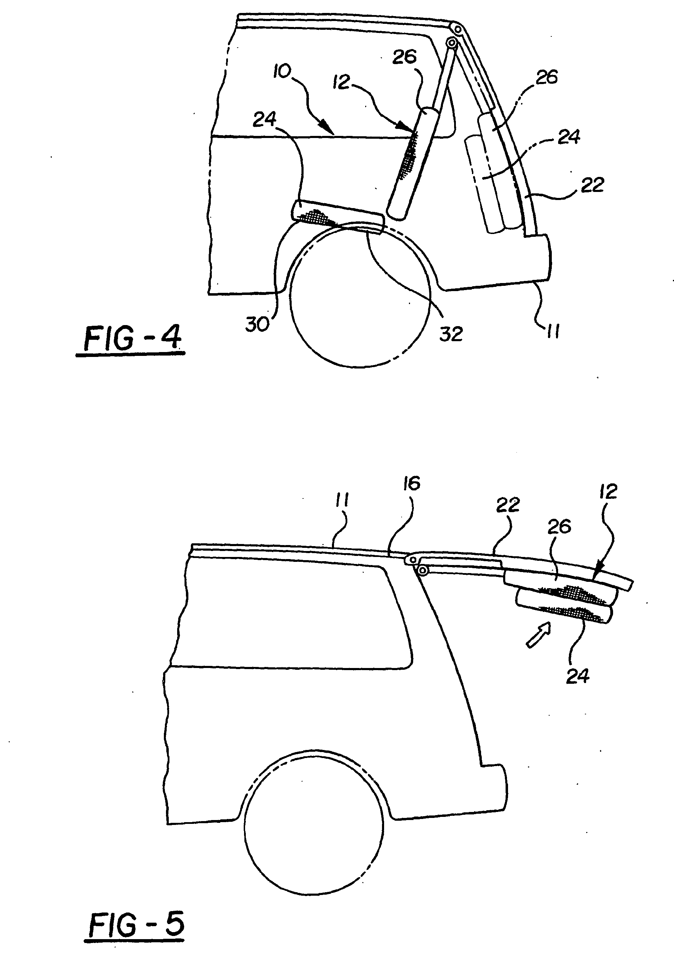

Referring to Figure 4, the seat assembly 12 is shown in the use configuration A and in the stowed configuration B. Referring to Figure 5, the rear lift gate 22 may be opened with the rear seat assembly 12 secured thereto for access to the passenger compartment 10.

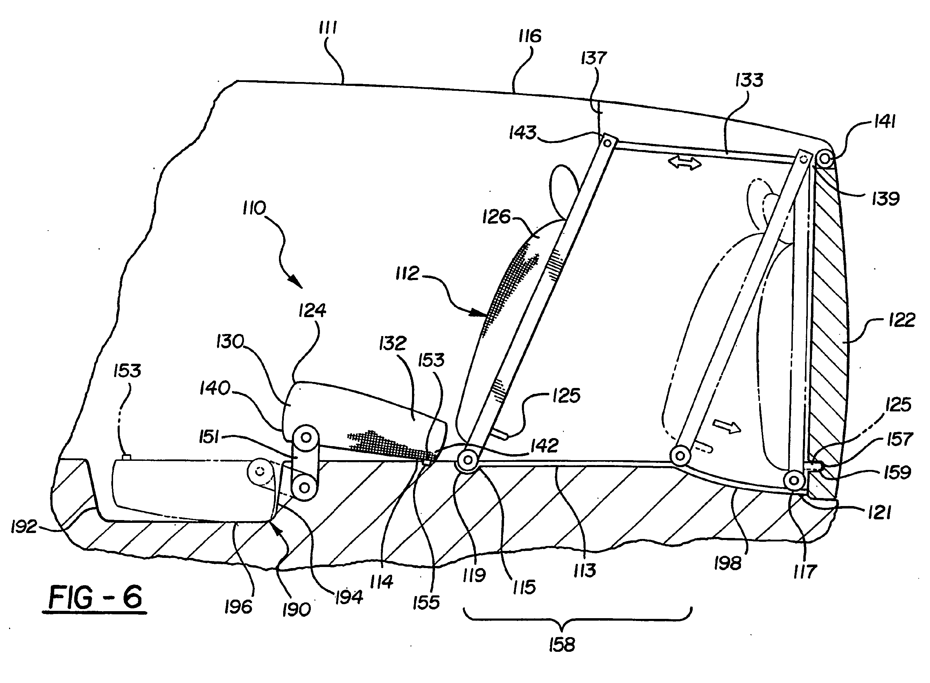

Referring to Figures 6-8, wherein similar elements are offset by 100 from those illustrated in the previous Figures, an embodiment of the invention is shown. A passenger compartment, generally shown at 110, includes a rear seat assembly, which is generally indicated at 112. The passenger compartment 110 also includes a planar floor 114 and a roof 116. The floor 114 defines a recessed area, generally indicated at 190. The recessed area 190 includes a vertical front wall 192, a vertical rear wall 194, and a pair of vertical opposing lateral side walls (not shown) extending between the front wall 192 and the rear wall 194. A lower floor portion 196 interconnects the front wall 192, the rear wall 194, and the side walls. The floor 114 further defines an arcuate rear recessed area 198.

The translator 158 includes a pair of generally parallel guides 113 extending along the floor 114 between a first guide end 115 and a second guide end 117. The first guide end 115 includes a relief 119, and the second guide end 117 includes an arcuate section 121, which follows the contour of the floor 114.

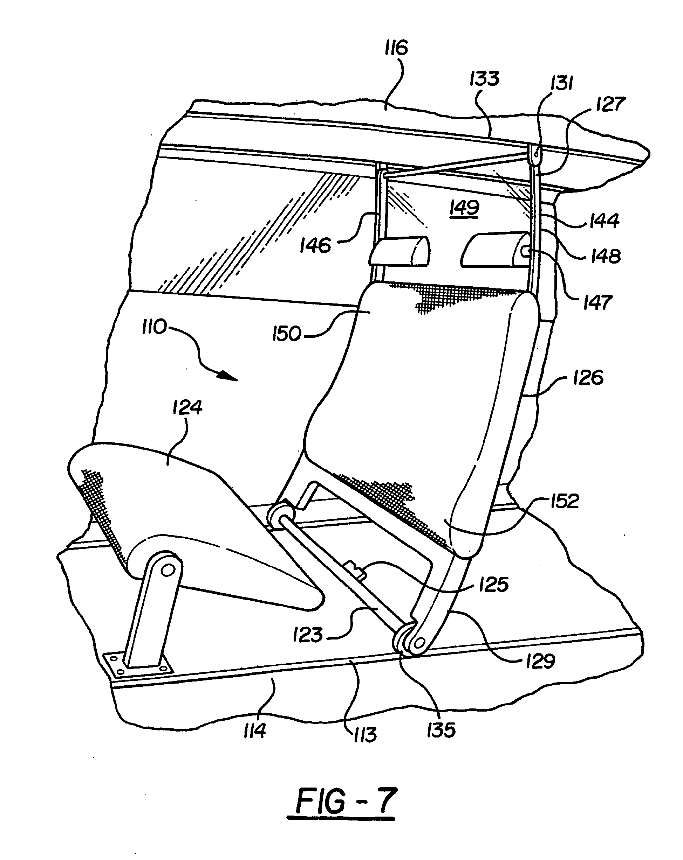

The rear seat assembly 112 includes a seat back 126 and an independent seat cushion 124. Referring to Figure 7, the seat back 126 includes a generally rectangular seat back frame 144 having two generally parallel side members 146, 148 interconnected by an upper cross member 150 and a lower cross member 152 for supporting a support bar 123. The support bar 123 includes a latch 125 fixedly secured thereto.

The seat back side members 146, 148 are mirror images of one another and, therefore, only side member 148 will be described. The side member 148 extends from a first end 127 generally at the roof 116 of the vehicle to a second end 129 generally located at the floor 114. The first end 127 of the side member 148 includes a roller mechanism 131 that slidably engages a track 133 positioned along the roof 116. The second end 129 of the side member 148 includes a roller mechanism 135 that follows the guide 113 for ease of moving the seat back 126 between a use configuration and a stowed configuration. Referring back to Figure 6, the track 133 extends between a front end 137 and a rear end 139 ending generally at a hinge mechanism 141. The front end 137 has a latch 143 for locking the roller mechanism 131 when the rear seat assembly 112 is in the use configuration. A relief 145 prevents the seat back 126 from moving when locked in the use configuration.

Referring to Figure 7, the side member 148 further includes a head restraint 147 slidably connected thereto. A transparent surface 149, made from Plexiglas, polycarbonate, or a similar material, interconnects the side members 146, 148 above the upper cross member 150. The transparent surface 149 supports the head restraint 147 to protect an occupant's head during a rear impact. In addition, the transparent surface 149 allows for rearward visibility.

Referring once again to Figure 6, the seat cushion 124 includes a generally rectangular seat cushion frame 134 having a pair of generally parallel seat cushion side members 136, 138 interconnected by a front cross member 140 and a rear cross member 142. The seat cushion 124 includes a pair of generally parallel pivot arms 151. The pivot arms 151 are pivotally connected to the seat cushion side members 136, 138 and to the rear wall 194 to allow the seat cushion 124 to pivot between a use configuration, shown by A, and a stowed configuration, shown by B. The rear cross member 142 also includes a latch 153. A striker 155 extends out from the floor 114, and when the seat cushion 124 is moved into the seated position, the rear cross member latch 153 engages the striker 155 and creates a rigid seating area.

The rear lift gate 122 defines a recessed area 157. The recessed area 157 includes a striker 159. The recessed area 149 receives the latch 125 on the support bar 123 and guides the latch 125 into engagement with the striker 159.

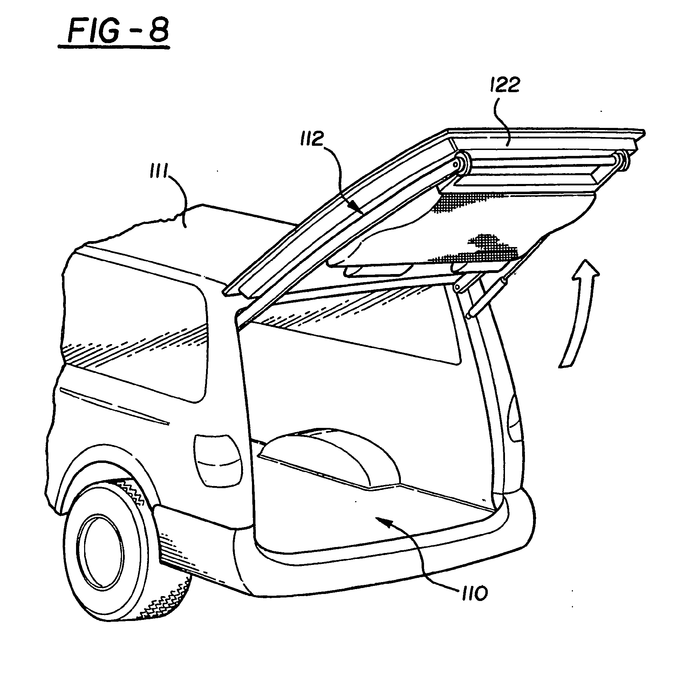

In operation, the rear seat assembly 112 is generally found in the use configuration, as is shown at A in Figure 6. The seat cushion 124 is released from the latch 153, which allows the seat cushion 124 to pivot about the pivot arms 151 to the rear wall 194 of the recessed area 190 thereby filling the recessed area 190 and creating a generally flat floor 114 at B in Figure 6. The latch 143 is then actuated releasing the seat back side members 146, 148 and allowing for movement of the seat back 126 along the tracks 133 to the stowed configuration. The first end 127 of the seat back side members 146, 148 moves until the roller mechanisms 135 of the second end 129 of the seat back side members 146, 148 exit the relief. The second end 129 of the seat back side members 146, 148 then follows the guides 113 until the seat back 126 reaches the stowed configuration. At this time, the latch 125 enters the recessed area 157 of the rear lift gate 122 and engages the striker 159 therein, thus securing the seat assembly 112 to the rear lift gate 122. Referring to Figure 8, the rear lift gate 122 may now be opened with the seat back 126 secured thereto for access to an uninterrupted passenger compartment 110. In this embodiment, the roller mechanisms 135 may be retained in the tracks 133 or, alternatively, they may be released when the lift gate 122 is opened. If they are retained, the tracks 133 must provide freedoms sufficient for the rollers 135 to move through two dimensions.

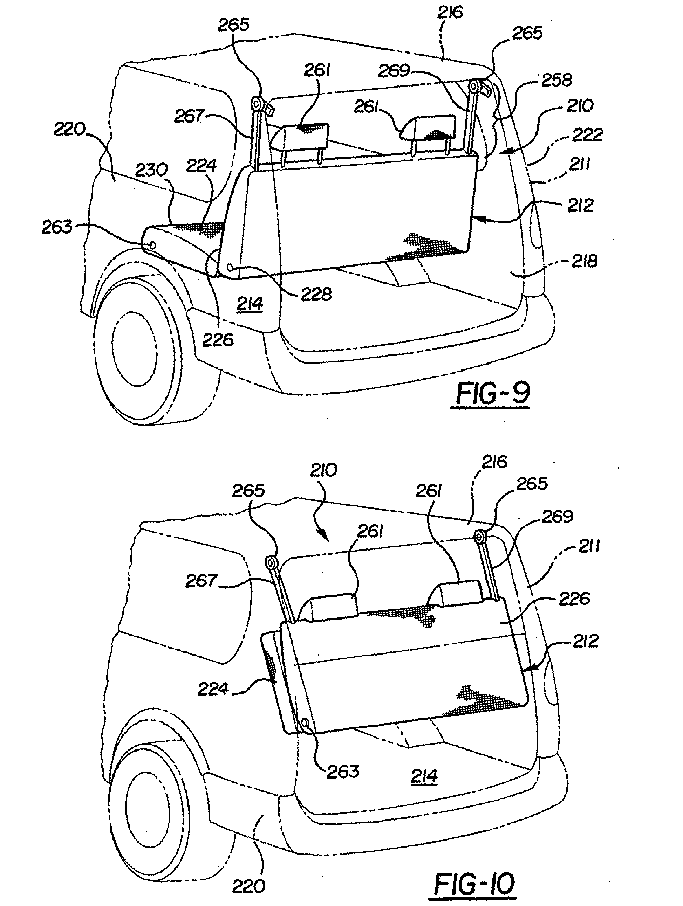

A perspective view of rear seat assembly not incorporated by the present invention is shown in Figures 9 and 10 respectively wherein reference characters for elements similar to those in Figures 1 to 5 are offset by 200. Referring to Figure 9, a passenger compartment of a vehicle is generally shown at 210. The passenger compartment 210 includes a rear seat assembly, generally indicated at 212. The passenger compartment 210 further includes a floor 214 and a roof 216. A pair of opposing, generally parallel sidewalls 218, 220 extend laterally between a front portion of the vehicle and a rear lift gate 222. The sidewalls 218, 220 also extend vertically between the floor 214 and the roof 216.

The rear seat assembly 212 includes a seat cushion 224 pivotally coupled to a generally upright seat back 226 by a recliner mechanism 228. The rear seat assembly 212 also includes a pair of headrests 261 operatively coupled to the seat back 226 for folding pivotal movement from an upright use position to a forward tucked position against the seat back 226. The seat cushion 224 is releasably latched in the seating position to the opposing sidewalls 218, 220 by a latch 263.

A translator is generally shown at 258. The translator 258 serves to move the rear seat assembly 212 between a use configuration, as shown in Figure 9, and a stowed configuration, as shown in Figure 10. The translator 258 includes a concentric pivot mechanism 265 extending downwardly from the roof 216. The translator 258 also includes a pair of swing arms 267, 269 extending upwardly from the seat back 226 to the roof 216. The swing arms 267, 269 are pivotally coupled to the roof 216 by the concentric pivot mechanism 265. The swing arms 267, 269 support the rear seat assembly 212 from the roof 216 and also hold the rear seat assembly 212 above the floor 214. The pivot mechanism 265 is concentric with a pivot axis of the rear lift gate 222 to allow pivotal movement of the rear lift gate 222 between an open position and a closed position.

In operation, starting from the use configuration as shown in Figure 9, the seat cushion 224 is released from the sidewalls 218, 220 by actuation of the latch 263. The recliner mechanism 228 is then activated allowing the seat cushion 224 to pivot upwardly against the seat back 226. The headrests 261 may also be pivoted to a tucked position against the seat back 226. The translator 258 then pulls the seat back 226 and the seat cushion 224 rearwardly against the rear lift gate 222. After the seat back 226 has moved to a stowed configuration adjacent to the rear lift gate 222, the seat back 226 may further be latched or otherwise secured to the rear lift gate 222. The swing arms 267, 269 pivotally support the rear seat assembly 212 upon pivotal movement between the use configuration and the stowed configuration adjacent to the rear lift gate 222.

Since the pivot mechanisms 265 are concentric with the pivots of the rear lift gate 222, the rear seat assembly 212 may pivot therewith in the stowed configuration when the lift gate 222 is pivoted between the closed and open positions. As a result, unobstructed access to the passenger compartment 210 is provided.

The invention has been described in an illustrative manner. It is to be understood that the terminology, which has been used, is intended to be in the nature of words of description rather than of limitation.

Many modifications and variations of the invention are possible in light of the above teachings. Therefore, within the scope of the appended claims, the invention may be practiced other than as specifically described.

## Claims

1. A rear seat assembly (112) movable between a use configuration and a stowed configuration within a passenger compartment (110) of a motor vehicle (111) having a floor, a roof, a pair of sidewalls (118, 120) extending between the floor (114) and the roof (116), and a rear lift gate (122), said rear seat assembly comprising:
a seat cushion (124) having a front portion (130) and a rear portion (132);
a seat back (126); and
a translator (158) coupled to said seat back (126), said translator moving said seat back between the use configuration and the stowed configuration, where said seat back is secured to the rear lift gate (122) and moves therewith between its open and closed positions;
**characterized in that**
the moving of said seat back between the use configuration and the stowed configuration involves a translational movement; and
wherein said floor (114) includes a recessed area (190) whereby said seat cushion (124) pivots into said recessed area (190) to create a generally flat floor.

2. A rear seat assembly as set forth in claim 1 wherein said translator (158) includes a track (133) extending along the motor vehicle from a position disposed adjacent the rear lift gate (122) to a position fore thereof.

3. A rear seat assembly as set forth in claim 2 wherein said translator (158) includes a pair of guides (113) extending along the floor (114) of the motor vehicle from a position disposed adjacent the rear lift gate (122) to a position fore thereof.

4. A rear seat assembly as set forth in claim 3 wherein said translator (158) includes a track latch (143) for selectively locking said seat back (126) in the use configuration and unlocking said seat back (126) allowing said seat back to traverse along said track (133) and said guides (113) toward the rear lift gate (122).

5. A rear seat assembly as set forth in claim 4 wherein said seat back (126) includes a pair of seat back latches (125) extending out towards the rear lift gate (122) to selectively engage the rear lift gate (122) when said seat back (126) abuts thereagainst.

6. A rear seat assembly as set forth in claim 5 including a floor latch (153) fixedly secured to the floor (114), said floor latch (153) retaining said rear portion (132) of said seat cushion (124) to the floor (114) to maintain said seat cushion (124) in the use configuration.

7. A rear seat assembly as set forth in claim 6 including a pivot arm (151) pivotally interconnecting said front portion (130) of said seat cushion (124) and the floor (114), said pivot arm (151) allowing said seat cushion (124) to move between the use configuration and the stowed configuration.

## Patentansprüche

1. Eine Rücksitzanordnung (112), die zwischen einer Gebrauchskonfiguration und einer verstauten Konfiguration in einer Fahrgastzelle (110) eines Kraftfahrzeuges (111), das einen Boden, ein Dach, ein Paar zwischen dem Boden (114) und dem Dach (116) sich erstreckender Seitenwände (118, 120) und eine hintere Hebetür (122) aufweist, bewegbar ist, wobei die Rücksitzanordnung umfasst:
ein Sitzpolster (124), das einen vorderen Abschnitt (130) und einen hinteren Abschnitt (132) aufweist,
eine Sitzlehne (126), und
einen Translator (158), der an die Sitzlehne (126) gekoppelt ist, wobei der Translator die Sitzlehne zwischen der Gebrauchskonfiguration und der verstauten Konfiguration bewegt, in der die Sitzlehne an der hinteren Hebetüre (122) befestigt ist und sich mit dieser zwischen der geöffneten und geschlossenen Position bewegt,
**dadurch gekennzeichnet, dass**
die Bewegung der Sitzlehne zwischen der Gebrauchskonfiguration und der verstauten Konfiguration eine translatorische Bewegung einschließt und
der Boden (114) einen vertieften Bereich (190) umfasst, wodurch das Sitzpolster (124) in den vertieften Bereich (190) schwenkt, um einen im wesentlichen flachen Boden zu schaffen.

2. Die Rücksitzanordnung nach Anspruch 1, wobei der Translator (158) eine Schiene (133) umfasst, die sich entlang des Kraftfahrzeugs von einer nahe der hinteren Hebetüre (122) angeordneten Position bis zu einer davorliegenden Position erstreckt.

3. Die Rücksitzanordnung nach Anspruch 2, wobei der Translator (158) ein Paar von Führungen (113) umfasst, die sich entlang des Bodens (114) des Kraftfahrzeuges von einer nahe der hinteren Hebetüre (122) angeordneten Position bis zu einer davorliegenden Position erstrecken.

4. Die Rücksitzanordnung nach Anspruch 3, wobei der Translator (158) eine Schienenverriegelung (143) umfasst, um wahlweise die Sitzlehne (126) in der Gebrauchkonfiguration zu verriegeln und die Sitzlehne (126) zu entriegeln, um der Sitzlehne zu ermöglichen, entlang der Schiene (133) und den Führungen (113) in Richtung der hinteren Hebetüre (122) zu verfahren.

5. Die Rücksitzanordnung nach Anspruch 4, wobei die Sitzlehne (126) ein Paar Sitzlehnenverriegelungen (125) umfasst, die in Richtung der hinteren Hebetüre (122) hervorstehen, um wahlweise in die hintere Hebetüre (122) einzugreifen, wenn die Sitzlehne (126) daran anliegt bzw. anstößt.

6. Die Rücksitzanordnung nach Anspruch 5 mit einer Bodenverriegelung (153), die unbeweglich an dem Boden (114) befestigt ist, wobei die Bodenverriegelung (153) den hinteren Abschnitt (132) des Sitzpolsters (124) an dem Boden (114) befestigt, um das Sitzpolster (124) in der Gebrauchskonfiguration zu halten.

7. Die Rücksitzanordnung nach Anspruch 6 mit einem Schwenkarm (151) der schwenkbar den vorderen Abschnitt (130) des Sitzpolsters (124) und den Boden (114) verbindet, wobei der Schwenkarm (151) dem Sitzpolster (124) ermöglicht, sich zwischen der Gebrauchskonfiguration und der verstauten Konfiguration zu bewegen.

## Revendications

1. Ensemble formant siège arrière (112) mobile entre une configuration d'utilisation et une configuration rangée à l'intérieur d'un compartiment passager (110) d'un véhicule à moteur (111) ayant un plancher, un toit, une paire de parois latérales (118, 120) s'étendant entre le plancher (114) et le toit (116), une porte de hayon arrière (122), ledit ensemble formant siège arrière comprenant:
un coussin de siège (124) ayant une portion antérieure (130) et une portion postérieure (132) ;
un dossier de siège (126) ; et
un mécanisme de translation (158) couplé audit dossier de siège (126), ledit mécanisme de translation déplaçant ledit dossier de siège entre la configuration d'utilisation et la configuration rangée, dans laquelle ledit dossier de siège est attaché à la porte de hayon arrière (122) et se déplace avec elle entre sa position ouverte et sa position fermée ;
**caractérisé en ce que**
le déplacement dudit dossier de siège entre la configuration d'utilisation et la configuration rangée implique un mouvement de translation ; et
dans lequel ledit plancher (114) inclut une zone évidée (190), grâce à quoi ledit coussin de siège (124) pivote en entrant dans ladite zone évidée (190) pour produire un plancher généralement plat.

2. Ensemble formant siège arrière selon la revendication 1, dans lequel ledit mécanisme de translation (158) inclut une voie (133) s'étendant le long du véhicule à moteur depuis une position disposée adjacente à la porte de hayon arrière (122) jusqu'à une position en avant de celle-ci.

3. Ensemble formant siège arrière selon la revendication 2, dans lequel ledit mécanisme de translation (158) inclut une paire de guides (113) s'étendant le long du plancher (114) du véhicule à moteur depuis une position disposée adjacente à la porte de hayon arrière (122) jusqu'à une position en avant de celle-ci.

4. Ensemble formant siège arrière selon la revendication 3, dans lequel ledit mécanisme de translation (158) inclut un verrou de voie (143) pour bloquer sélectivement ledit dossier de siège (126) dans la configuration d'utilisation et débloquer ledit dossier de siège (126) en permettant audit dossier de siège de traverser le long de ladite voie (133) et desdits guides (113) vers la porte de hayon arrière (122).

5. Ensemble formant siège arrière selon la revendication 4, dans lequel ledit dossier de siège (126) inclut une paire de verrous de dossier (125) s'étendant vers l'extérieur en direction de la porte de hayon arrière (122) pour engager sélectivement la porte de hayon arrière (122) quand ledit dossier de siège (126) vient buter contre celle-ci.

6. Ensemble formant siège arrière selon la revendication 5, incluant un verrou de plancher (153) attaché de manière fixe sur le plancher (114), ledit verrou de plancher (153) retenant ladite portion postérieure (132) dudit coussin de siège (124) sur le plancher (114) pour maintenir ledit coussin de siège (124) dans la configuration d'utilisation.

7. Ensemble formant siège arrière selon la revendication 6, incluant un bras pivotant (151) qui interconnecte en pivotement ladite portion antérieure (130) dudit coussin de siège (124) et le plancher (114), ledit bras pivotant (151) permettant audit coussin de siège (124) de se déplacer entre la configuration d'utilisation et la configuration rangée.
